# EUROPÄISCHE PATENTANMELDUNG

(11) **EP 1 344 683 A2**
(43) Veröffentlichungstag der Anmeldung: **17.09.2003**
(21) Anmeldenummer: 03004575.1
(22) Anmeldetag: 28.02.2003
(51) Int. Cl.: B60Q 1/14

(54) **Steuerungseinheit zur Einstellung von Tagesfahrlicht an einem Kraftfahrzeug und Verfahren zum Betreiben einer Aussenbeleuchtung in einem Tagesfahrlichtbetrieb**

(30) Priorität: 13.03.2002 DE 10210951
(71) Anmelder: ADAM OPEL AG, 65423 Rüsselsheim (DE)
(72) Erfinder: Diehl, Peter G., 64521 Gross-Gerau (DE); Kanning, Torsten, 65346 Eltville (DE)

(57) **Zusammenfassung**

Eine Steuerungseinheit stellt wenigstens eine Beleuchtungseinrichtung (3, 5) eines Kraftfahrzeuges (2) auf Tagesfahrlicht in Abhängigkeit von einer Fahrbereitschaftsbedingung ein. Bei Tagesfahrlicht wird die wenigstens eine Beleuchtungseinrichtung (3, 5) des Kraftfahrzeuges (2) mit reduzierter Leistung betrieben.

## Beschreibung

Die Erfindung bezieht sich auf eine Steuerungseinheit zur Einstellung wenigstens einer Beleuchtungseinrichtung eines Kraftfahrzeuges auf Tagesfahrlicht in Abhängigkeit von einer Fahrbereitschaftsbedingung sowie ein Verfahren zum Betreiben einer Außenbeleuchtung in einem Tagesfahrlichtbetrieb.

In einigen Ländern, wie den skandinavischen Ländern, ist es Pflicht, Fahrten mit einem Kraftfahrzeug auch am Tage mit Licht durchzuführen. Dabei ist das Licht nicht zum Ausleuchten des Fahrtweges bestimmt sondern vielmehr dazu, von anderen Verkehrsteilnehmern besser erkannt zu werden. Zwar muss beim Tagesfahrlicht der Strahlungsfluss der Lichtquellen den bei eingeschaltetem Standlicht erreichten Wert übersteigen, jedoch braucht der Strahlungsfluss zumindest aus Sicherheitsgründen nicht so hoch zu sein wie während der Dunkelheit.

Neben der Möglichkeit das Tagesfahrlicht manuell durch den Fahrzeugführer durch Betätigen eines Schalters einzuschalten, gibt es auch bereits automatisierte Einschaltverfahren. So wird beispielsweise beim Anlassen des Motors des Kraftfahrzeuges das Abblendlicht über einen elektrischen Impuls von der Zündspule eingeschaltet. Dadurch ist sichergestellt, dass das Kraftfahrzeug auch am Tage andauernd mit eingeschalteter Beleuchtung gefahren wird. Hierbei wird als Tagesfahrlicht das normale Abblendlicht an den Scheinwerfern beziehungsweise das normale Licht an den Rückleuchten benutzt. Dies ist insofern nachteilig, als diese Beleuchtungseinrichtungen des Kraftfahrzeuges mit den normalen, auch bei Dunkelheit benutzten nominalen elektrischen Leistungen betrieben werden. Dadurch ist die Anschaltdauer deutlich mehr als doppelt so hoch wie diejenige beim Betrieb ohne Tagesfahrlicht.

Glühlampen von Scheinwerfern eines Kraftfahrzeuges sind aber in der Regel so ausgelegt, dass sie bei normaler Betriebsweise einige Jahre halten und damit zumindest einen wesentlichen Teil des Nutzungszeitraumes eines Kraftfahrzeuges abdecken. Dabei ist allerdings nicht berücksichtigt, dass das Licht bei Tag und Nacht angeschaltet ist. Die Lebensdauer hängt natürlich auch stark von Betriebsparametern, wie der zugeführten beziehungsweise verbrauchten elektrischen Leistung, ab. Ein Tagesfahrlichtbetrieb mit normalem Abblendlicht führt folglich zwangsläufig zu einer deutlichen Reduzierung der Lebensdauer der Glühlampen der Scheinwerfer. Insbesondere bei bestimmten Glühlampen, wie etwa dem Xenon-Licht, ist ein Austausch mit relativ hohen Kosten verbunden.

Aus der DE 100 03 061 A1 ist ein Beleuchtungssystem für ein Kraftfahrzeug bekannt, das eine Tagessignallichtstellung aufweist. Bei der Tagessignallichtstellung wird ein Teil des Lichtstromes des Lichtbündels derart abgelenkt, dass ein Lichtbündel mit verringerter Lichtstärke entsteht, als es nach den Versorgungsgrößen entstehen müsste. Es wird also in nachteiliger Weise erst elektrische Energie erzeugt und dann unausgenutzt beseitigt. Darüber hinaus wird die Glühlampe zudem auch bei der Tagessignallichtstellung voll belastet.

Es ist somit Aufgabe der Erfindung, die Lebensdauer von Glühlampen an Kraftfahrzeugen auch bei einem Tagesfahrlichtbetrieb ausreichend groß zu halten.

Erfindungsgemäß wird die Aufgabe mit einer Steuerungseinheit zur Einstellung wenigstens einer Beleuchtungseinrichtung an einem Kraftfahrzeug auf Tagesfahrlicht in Abhängigkeit von einer Fahrbereitschaftsbedingung dadurch gelöst, dass bei Tagesfahrlicht die Beleuchtungseinrichtungen an dem Kraftfahrzeug mit reduzierter Leistung betrieben werden.

Die Erfindung bringt den Vorteil mit sich, dass die Glühlampen der Beleuchtungseinrichtungen aufgrund des Betriebs mit reduzierter Leistung eine relativ hohe Lebensdauer aufweisen.

Erfindungsgemäß wird die Aufgabe bei einem Verfahren zum Betreiben einer Außenbeleuchtung eines Kraftfahrzeugs in einem Tagesfahrlichtbetrieb durch die Schritte gelöst:
- Abfragen eines Motorbetriebszustands,
- Abfragen eines Fahrzeugbetriebszustands,
- Abfragen eines Zündungszustands,
- Abfragen eines Parklicht-Einschaltzustands,
- Auswerten der Zustände,
wobei bei einem Vorliegen der für ein Fahren des Kraftfahrzeuges notwendigen Zustände und ausgeschaltetem Parklicht das Tagesfahrlicht aktiviert und in dem Tagesfahrlichtbetrieb die Fahrzeugbeleuchtung in einem Niedrigenergie-Modus betrieben wird.

Die Außenbeleuchtung, wie etwa Scheinwerfer und/oder Rückleuchten des Kraftfahrzeugs, wird bei Vorliegen einer Fahrbereitschaftsbedingung in einem Tagesfahrlichtbetrieb mit einer gegenüber einem Abblendlichtbetrieb reduzierten Leistung betrieben. Dazu werden die Zustände verschiedener Fahrzeugkomponenten, wie derjenige des Motors, des gesamten Fahrzeugs, der Zündung, des Parklichts, überprüft. Nach einer Auswertung der erhaltenen Zustandsgrößen wird dann der Tagesfahrlichtbetrieb mit reduzierter Leistung aktiviert, sofern die für einen Fahrbetrieb des Kraftfahrzeuges notwendigen Zustände vorliegen und das Parklicht nicht eingeschaltet ist.

Bevorzugt wird das Tagesfahrlicht mit reduzierter Leistung durch eine gepulste Spannungsversorgung der Fahrzeugbeleuchtung erreicht. Dabei ist eine Spannungsversorgung mit veränderbaren Pulsweiten besonders günstig. Hier liegt der Vorteil in einer kontinuierlichen Einstellung der den Beleuchtungseinrichtungen zugeführten Leistung.

Mit der erfindungsgemäßen Steuerungseinheit beziehungsweise dem erfindungsgemäßen Verfahren können die Scheinwerfer und/oder die Rückleuchten und/oder die Kennzeichenbeleuchtung und/oder die Nebelscheinwerfer mit reduzierter Leistung zur Einstellung des Tagesfahrlichtes betrieben werden. Im Rahmen der Erfindung ist es denkbar, nur einzelne Beleuchtungseinrichtungen, wie die vorderen Scheinwerfer, mit Tagesfahrlicht mit reduzierter Leistung zu betreiben.

Der Tagesfahrlichtbetrieb mit reduzierter Leistung kann erfindungsgemäß auch über einen Schaltzyklus eines Abblendlichtschalters manuell ein- und/oder ausgeschaltet werden. Neben der Ersparnis zusätzlicher Schalteinrichtungen kann der Fahrzeugführer hier jederzeit vom Tagesfahrlichtbetrieb mit reduzierter Leistung in den Normallichtbetrieb, einen Tagesfahrlichtbetrieb mit normaler Leistung, umschalten, etwa um seine Sicherheit auch bei kurzfristig auftretenden schlechten Sichtbedingungen zu gewährleisten. Andererseits kann er auch die vorhandenen Schalteinrichtungen zum Abschalten der Lichter benutzen.

Zweckmäßigerweise umfasst die Steuerungseinheit eine digitale Logikschaltung, die auch eine Prozessorund/oder Rechnersteuerung aufweisen kann. Ferner können die Funktionen der Steuerungseinheit weitestgehend durch Computerprogramm-Befehle realisiert werden. Es ist jedoch auch im Rahmen der Erfindung der Einsatz äquivalenter analoger Bauteile in der Steuerungseinheit denkbar.

Die Absenkung der Leistungsversorgung der Scheinwerfer im Tagesfahrlichtbetrieb ist nach einer Weiterbildung der Erfindung derjenigen der übrigen Beleuchtungseinrichtungen übergeordnet. In weiterer Ausgestaltung der Erfindung ist vorgesehen, dass die Scheinwerfer bei Tagesfahrlicht mit reduzierter Leistung vollständig ausgeschaltet sind und das Tagesfahrlicht mit reduzierter Leistung dann von den Nebelscheinwerfern erbracht wird. Dabei werden wiederum die Nebelscheinwerfer in einem Niedrigenergiemodus betrieben. Vorteilhaft hierbei ist eine noch größere Lebensdauerverlängerung der Scheinwerfer-Glühlampen. Diese bevorzugte Ausführungsform findet Einsatz bei Kraftfahrzeugen, die Scheinwerfer mit Xenon-Glühlampen aufweisen.

Es versteht sich, dass die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

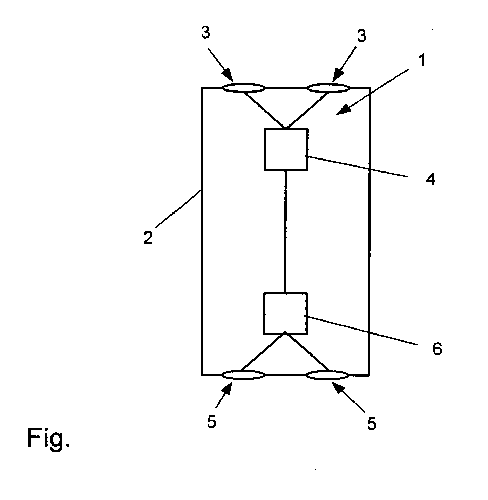

Die Erfindung wird im Folgenden anhand eines Ausführungsbeispieles unter Bezugnahme auf die zugehörige Zeichnung näher erläutert. Die einzige Fig. zeigt eine schematische Darstellung eines Kraftfahrzeuges mit der erfindungsgemäßen Steuerungseinheit.

Ein Tagesfahrlicht mit reduzierter Leistung wird über eine elektronische Steuerungseinheit 1 in Abhängigkeit von verschiedenen Zustands- beziehungsweise Betriebsparametern des Kraftfahrzeugs aktiviert. Dabei werden insbesondere auch solche Parameter überprüft, die für eine Fahrbereitschaft notwendig sind. Die Steuerungseinheit 1 kann zweiteilig ausgeführt sein. Dabei ist dann eine die Leistung der am vorderen Fahrzeugteil befindlichen Beleuchtungseinrichtungen 3 steuernde erste Einheit 4 in einer im Motorraum vorgesehenen elektrischen Steuerung (underhood electrical center) vorgesehen. Die am Fahrzeugende befindlichen Beleuchtungseinrichtungen 5 werden dann von einer zweiten Einheit 6 in einer im Kofferraumbereich vorgesehenen hinteren elektrischen Steuerung (rear electrical center) gesteuert. Beide Einheiten 4, 6 sind miteinander verbunden und aufeinander abgestimmt.

Die Steuerungseinheit 1 stellt die Leistung der Scheinwerfer, der Rückleuchten, der Kennzeichenbeleuchtung und/oder der Nebelscheinwerfer des Kraftfahrzeugs 2 auf einen vorgebbaren Wert zwischen 0 und 100% von der Betriebsleistung der Leuchten im Normallicht-Betrieb bei Dunkelheit ein. Dabei wird der Wert in einem elektrisch löschbaren und programmierbaren Festwertspeicher (EEPROM) eingestellt. Übliche Werte können dabei etwa 30-40% der Normalleistung sein.

Die Reduzierung der Leistung der einzelnen Beleuchtungseinrichtungen 3, 5 kann über einen gepulsten Betrieb der Versorgungsspannungen realisiert werden. Dabei ist eine Möglichkeit eine Pulsweitenmodulation der Versorgungsspannungen, bei der mit einer festen Wiederholfrequenz von vorzugsweise 63 Hz Spannungspulse an die Beleuchtungseinrichtungen 3, 5 gelegt werden. Die Länge der Pulse kann dann zwischen 0 und 15.87 ms variiert werden, wodurch die der Beleuchtungseinrichtung 3, 5 zugeführte Leistung geändert wird. Dabei entspricht der Wert von Null einer ausgeschalteten Beleuchtungseinrichtung 3, 5 und der Wert von 15.87 ms einer mit voller Leistung betriebenen Beleuchtungseinrichtung 3, 5. Die Frequenz wird so gewählt, dass sie vom menschlichen Auge zeitlich nicht aufgelöst werden kann. Somit erscheint das gepulste Licht dem menschlichen Auge als konstante Lichtquelle.

Die Funktionsweise der Steuerungseinheit 1 beziehungsweise des Verfahrens wird im Folgenden beschrieben. Zum Einschalten des Tagesfahrlichtbetriebes mit reduzierter Leistung überprüft die Steuerungseinheit 1 über einen Motorstatus den Zustand des Motors, den Fahrzeugsystem-Betriebsmodus, die Zündung sowie einige Lichtschalter. Wenn die Steuerungseinheit 1 über einen Sensor oder einen elektrischen Impuls feststellt, dass erstens der Motorstatus auf Betriebsmodus und zweitens der Fahrzeugsystem-Betriebsmodus auf Fahrbetrieb gesetzt ist, oder die Zündung des Fahrzeugs angeschaltet ist und der Fahrzeugsystem-Betriebsmodus auf Starten gesetzt ist, und drittens das Abblendlicht nicht eingeschaltet ist, und viertens das Parklicht ausgeschaltet ist oder ein automatischer Lichtschalter nicht aktiv ist oder der automatische Lichtschalter aktiv ist und ein Außenlichtpegelwert auf "TAG" gesetzt ist, dann wird das Tagesfahrlicht mit reduzierter Leistung eingeschaltet.

Durch ein Abfragen der vorgenannten Zustandsgrößen wird sichergestellt, dass das Tagesfahrlicht mit reduzierter Leistung nur im Fahrbetrieb des Kraftfahrzeuges 2 oder beim Einleiten des Fahrbetriebes eingeschaltet wird. Es wird durch die Abfragen ebenfalls sichergestellt, dass das Tagesfahrlicht mit reduzierter Leistung nicht etwa bei reinen Park oder Haltevorgängen, welche nicht während einer Fahrt oder nicht verkehrsbedingt erfolgen, automatisch eingeschaltet wird. Dabei wird auch der automatische Lichtschalter einbezogen. Dieser dient im Wesentlichen der Vermeidung eines Einschaltens der durch Öffnen der Fahrzeugtüren aktivierbaren Türleuchten bei Tageslicht oder kann bei einem mit abgeschaltetem Motor geparkten Kraftfahrzeug 2 bei Dunkelheit über einen Sensor das Standlicht aktivieren.

Der Tagesfahrlichtbetrieb mit reduzierter Leistung ist über Einstellungen des elektrisch löschbaren und programmierbaren Festwertspeichers (EEPROM) bei Nichtvorliegen der vorgenannten Bedingungen deaktivierbar.

Der Tagesfahrlichtbetrieb mit reduzierter Leistung kann aber auch manuell ein- oder ausgeschaltet werden. Zum Einschalten wird dazu, wenn erstens der Motorstatus auf Betriebsmodus gesetzt ist, und zweitens der Fahrzeugsystem-Betriebsmodus auf Fahrbetrieb oder die Zündung des Kraftfahrzeugs 2 angeschaltet ist und der Fahrzeugsystem-Betriebsmodus auf Anlassen gesetzt ist, und drittens der Schalter für das Abblendlicht ausgeschaltet ist, der Schalter für das Abblendlicht innerhalb einer vorgebbaren Zeit von vorzugsweise 1 s zweimal kurz hintereinander betätigt. Dabei wird dann der Schalter für das Abblendlicht hintereinander ein- und gleich wieder ausgeschaltet. Zum Deaktivieren des Tagesfahrlichtes mit reduzierter Leistung ist der gleiche Schaltzyklus mit dem Schalter für das Abblendlicht durchzuführen. Bei beiden Schaltvorgängen darf der Parklichtschalter nach dem Ausschalten des Abblendlichtes nicht länger als ein vorgebbarer Wert von beispielsweise 1 s auf die Einschaltstellung gesetzt sein.

Im Rahmen der Erfindung ist es möglich, bei Tagesfahrlichtbetrieb mit reduzierter Leistung die unter schiedlichen Beleuchtungseinrichtungen 3, 5 mit unterschiedlichen Anteilen ihrer normalen Versorgungsspannungen zu belegen. Dabei sind die Einstellungen der Scheinwerfer und/oder der Nebelscheinwerfer grundsätzlich von größerer Bedeutung und somit zuerst einzustellen.

Die Erfindung ist nicht auf das beschriebene Ausführungsbeispiel beschränkt, das in vielfacher Art und Weise abgeändert werden kann. So kann die Steuerungseinheit 1 auch einteilig ausgeführt sein. Diese einteilige Form der Steuerungseinheit 1 kann entweder in der vorderen oder hinteren elektrischen Steuerung oder auch separat an den elektrischen Kreis am Kraftfahrzeug angeschlossen sein. Dabei muss die Steuerungseinheit 1 mit den entsprechenden Zustandsinformationen des Motors, des Kraftfahrzeugs 2 sowie der Beleuchtungseinrichtungen 3, 5 versorgt werden können.

### Bezugszeichenliste

- 1.: Steuerungseinheit
- 2.: Kraftfahrzeug
- 3.: Beleuchtungseinrichtung
- 4.: Einheit
- 5.: Beleuchtungseinrichtung
- 6.: Einheit

## Patentansprüche

1. Steuerungseinheit zur Einstellung wenigstens einer Beleuchtungseinrichtung (3, 5) eines Kraftfahrzeuges (2) auf Tagesfahrlicht in Abhängigkeit von einer Fahrbereitschaftsbedingung, **dadurch gekennzeichnet, dass** bei Tagesfahrlicht die wenigstens eine Beleuchtungseinrichtung (3, 5) des Kraftfahrzeuges (2) mit reduzierter Leistung betrieben wird.

2. Steuerungseinheit nach Anspruch 1, **dadurch gekennzeichnet, dass** die wenigstens eine Beleuchtungseinrichtung (3, 5) mit einer gepulsten Spannungsversorgung versorgt wird.

3. Steuerungseinheit nach Anspruch 2, **dadurch gekennzeichnet, dass** die gepulste Spannungsversorgung mit veränderbaren Pulsweiten vorgenommen wird.

4. Steuerungseinheit nach einem der Ansprüche 1 bis 3, **dadurch gekennzeichnet, dass** die wenigstens eine Beleuchtungseinrichtung (3, 5) die Scheinwerfer und/oder die Rückleuchten und/oder die Kennzeichenbeleuchtung und/oder die Nebelscheinwerfer umfassen.

5. Steuerungseinheit nach einem der Ansprüche 1 bis 4, **dadurch gekennzeichnet, dass** das Tagesfahrlicht über einen Schaltzyklus eines Abblendlichtschalters manuell geschaltet wird.

6. Steuerungseinheit nach einem der Ansprüche 1 bis 5, **dadurch gekennzeichnet, dass** die Steuerungseinheit (1) eine Logikschaltung umfasst.

7. Steuerungseinheit nach einem der Ansprüche 1 bis 6, **dadurch gekennzeichnet, dass** die Steuerungseinheit (1) eine Prozessor- und/oder Rechnersteuerung enthält.

8. Steuerungseinheit nach einem der Ansprüche 1 bis 7, **dadurch gekennzeichnet, dass** die Steuerungseinheit (1) als digitale Einheit ausgeführt ist.

9. Steuerungseinheit nach einem der Ansprüche 1 bis 8, **dadurch gekennzeichnet, dass** die Steuerungseinheit (1) wenigstens einen elektrisch löschbaren und programmierbaren Festwertspeicher enthält.

10. Steuerungseinheit nach Anspruch 9, **dadurch gekennzeichnet, dass** der wenigstens eine elektrisch löschbare und programmierbare Festwertspeicher Werte für die den Beleuchtungseinrichtungen (3, 5) bei Tagesfahrlicht zuzuführende Leistung enthält.

11. Steuerungseinheit nach Anspruch 9 oder 10, **dadurch gekennzeichnet, dass** der wenigstens eine elektrisch löschbare und programmierbare Festwertspeicher Einstellungen zum Aktivieren und/oder Deaktivieren des Tagesfahrlichtes enthält.

12. Steuerungseinheit nach einem der Ansprüche 1 bis 11, **dadurch gekennzeichnet, dass** die Steuerungseinheit (1) analoge Bauteile aufweist.

13. Steuerungseinheit nach einem der Ansprüche 4 bis 12, **dadurch gekennzeichnet, dass** die Absenkung der Leistungsversorgung der Scheinwerfer derjenigen der übrigen Beleuchtungseinrichtungen (3, 5) übergeordnet ist.

14. Steuerungseinheit nach einem der Ansprüche 4 bis 13, **dadurch gekennzeichnet, dass** die Scheinwerfer bei Tagesfahrlicht ausgeschaltet sind und das Tagesfahrlicht von den Nebelscheinwerfern erbracht wird.

15. Verfahren zum Betreiben einer Außenbeleuchtung eines Kraftfahrzeugs (2) in einem Tagesfahrlichtbetrieb umfassend die Schritte:
- Abfragen eines Motorbetriebszustands,
- Abfragen eines Fahrzeugbetriebszustands,
- Abfragen eines Zündungszustands,
- Abfragen eines Parklicht-Einschaltzustands,
- Auswerten der Zustände,
wobei bei einem Vorliegen der für ein Fahren des Kraftfahrzeuges (2) notwendigen Zustände und ausgeschaltetem Parklicht das Tagesfahrlicht aktiviert und in dem Tagesfahrlichtbetrieb die Fahrzeugbeleuchtung in einem Niedrigenergie-Modus betrieben wird.

16. Verfahren nach Anspruch 15, **dadurch gekennzeichnet, dass** der Niedrigenergie-Modus durch einen gepulsten Betrieb der Spannungsversorgung der Fahrzeugbeleuchtung vorgenommen wird.

17. Verfahren nach Anspruch 16, **dadurch gekennzeichnet, dass** der Niedrigenergie-Modus mit veränderbaren Pulsweiten der Spannungsversorgung vorgenommen wird.

18. Verfahren nach einem der Ansprüche 15 bis 17, **dadurch gekennzeichnet, dass** die Schritte des Abfragens, Auswertens und Aktivierens über eine Logikschaltung ausgeführt werden.
